# FASCICULE DE BREVET EUROPEEN

(11) **EP 0 963 874 B1**
(45) Date de publication et mention de la délivrance du brevet: **21.12.2005**
(21) Numéro de dépôt: 99401406.6
(22) Date de dépôt: 10.06.1999
(51) Int. Cl.: B60Q 3/04

(54) **Indicateur à bloc à lumière bi-matière**
Anzeiger mit Beleuchtungsblock aus zwei Materialen
Indicator with lighting block of two materials

(30) Priorité: 10.06.1998 FR 9807288
(43) Date de publication de la demande: 15.12.1999
(73) Titulaire: JOHNSON CONTROLS AUTOMOTIVE ELECTRONICS, 95526 Cergy Pontoise Cédex (FR)
(72) Inventeur: Metais, Derry, 95650 Genicourt (FR)
(74) Mandataire: Bloch, Gérard

(56) Documents cités:
- FR-A- 2 758 501
- US-A- 4 777 480
- US-A- 5 013 967

## Description

L'invention concerne l'éclairage des caractères et autres symboles d'indicateurs du type de ceux qu'on monte par exemple sur les tableaux de bord de véhicules automobiles.

Un indicateur selon le préambule de la revendication 1 es généralement connu de l'état de la technique.

Ces caractères et symboles peuvent être portés par un film sérigraphié s'étendant devant un guide de lumière disposé dans une boîte à lumière, le guide recevant la lumière d'une source, par une zone opposée au film sérigraphié, et la renvoyant vers le film, par une face d'éclairage tournée vers le film. Ce guide, à cet effet, doit présenter, du côté opposé à la face d'éclairage, une face de réflexion de lumière. Deux techniques ont jusqu'à maintenant été utilisées : soit on peint la face de réflexion, soit on la strie.

Pour préserver les propriétés réfléchissantes, en cas de stries, il faut à l'arrière de la surface striée ménager une lame d'air entre le guide et la boîte à lumière. Il en résulte des difficultés de moulage et une augmentation de coût. En cas de peinture, l'opération de peinture constitue en elle-même une contrainte.

L'invention vise à pallier ces inconvénients.

A cet effet, elle concerne un indicateur comprenant une boîte à lumière et un guide de lumière présentant une face de réflexion tournée vers la boîte à lumière et une face d'éclairage opposée à la face de réflexion, caractérisé par le fait que la boîte et le guide forment un ensemble à lumière monobloc bi-matière.

Grâce à l'intimité entre la boîte à lumière et le guide de lumière, formant un bloc à lumière, à la perfection de la surface de joint entre les deux éléments, on obtient une excellente réflexion, sans stries ni peinture.

Avantageusement, la boîte et le guide sont issus d'un moule pour injection bi-matière.

L'invention sera mieux comprise à l'aide de la description suivante faite en référence au dessin annexé, sur lequel
- la figure 1 est une vue très schématique en coupe de l'indicateur de l'invention et
- la figure 2 est une vue schématique en coupe du moule d'injection de l'indicateur.

L'indicateur comporte une boîte à lumière 1, un guide de lumière 2, devant lequel s'étend un film sérigraphié 3 rapporté sur une face avant 4, le film représentant des symboles et autres caractères d'indication, et, ici, une aiguille indicatrice 5. Par souci de clarté et s'agissant d'évidences pour l'homme du métier, beaucoup de caractéristiques de l'indicateur n'ont pas été représentées ni illustrées comme, par exemple, les ouvertures, dans le boîtier, le guide, la face avant et le film, pour le passage de l'axe d'aiguille, le passage de la lumière de sources d'éclairage non plus représentées, etc.

Le matériau du boîtier 1 et celui du guide 2 sont compatibles.

Deux matériaux sont considérés comme compatibles, s'ils possèdent des caractéristiques de retrait relativement voisines et/ou, accessoirement, présentant une relativement bonne adhérence mutuelle.

Comme matériau, on peut par exemple considérer l'acrylo-butadiène-styrène (ABS), le polyméthacrylate de méthyle (PMMA), le polypropylène (PP). Le boîtier peut être en PP et le guide, en PMMA.

Le guide de lumière présente une face de réflexion 6 tournée vers la boîte à lumière, formant surface de joint entre la boîte 1 et le guide 2, et une face d'éclairage 7 opposée à la face 6 et tournée vers le film sérigraphié 3. La boîte 1 et le guide 2 forment un ensemble monobloc bi-matière. La face 6, par laquelle la boîte à lumière 1 et le guide de lumière 2 sont parfaitement liés l'un à l'autre, constitue une excellente surface de réflexion. On remarquera qu'on peut lui donner toute forme, comme par exemple celle d'une surface lambertienne.

Globalement, l'indicateur a donc été injecté bi-matière.

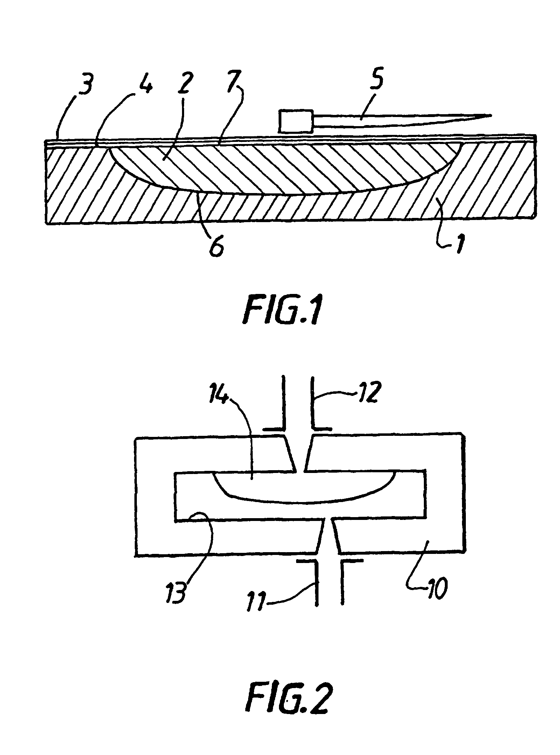

En référence à la figure 2, une presse à injection 10 forme l'injection des deux parties de l'indicateur, la boîte 1, d'une part, et le guide 2, d'autre part, respectivement par deux arrivées 11, 12.

La boîte est injectée depuis l'arrivée 11, à l'intérieur d'une partie de moule femelle 13, avec une empreinte centrale 14 ménageant avec la pièce femelle 13 l'espace correspondant au guide.

Après injection de la boîte à lumière dans la partie de moule adjacente à l'arrivée 11, et l'empreinte centrale 14 ayant été retirée, le guide de lumière 2 est injecté depuis l'arrivée 12.

## Revendications

1. Indicateur comprenant une boîte à lumière (1) et un guide de lumière (2) présentant une face de réflexion (6) tournée vers la boîte à lumière (1) et une face d'éclairage (7) opposée à la face de réflexion (6), **caractérisé par le fait que** la boîte (1) et le guide (2) forment un ensemble à lumière monobloc bi-matière.

2. Indicateur selon la revendication 1, dans lequel la face de réflexion (6) forme surface de joint entre la boîte (1) et le guide (2).

3. Indicateur selon l'une des revendications 1 et 2, dans lequel la boîte à lumière (1) et le guide de lumière (2) sont respectivement en matériaux compatibles.

4. Indicateur selon l'une des revendications 1 à 3, dans lequel la boîte à lumière (1) et le guide de lumière (2) sont issus d'un moule pour injection bi-matière.

## Patentansprüche

1. Anzeiger, der einen Beleuchtungsblock (1) und einen Lichtführer (2) umfasst, der eine Rückstrahlfläche (6) aufweist, die zu dem Beleuchtungsblock (1) gekehrt ist und eine Beleuchtungsfläche (7), die der Rückstrahlfläche (6) entgegengesetzt ist, **dadurch gekennzeichnet, dass** der Beleuchtungsblock (1) und der Lichtführer (2) eine einteilige Zweistoff-Lichteinheit bilden.

2. Anzeiger nach Anspruch 1, bei dem die Rückstrahlfläche (6) zwischen dem Beleuchtungsblock (1) und dem Lichtführer (2) eine Dichtungsfläche bildet.

3. Anzeiger nach einem der Ansprüche 1 und 2, bei dem der Beleuchtungsblock (1) und der Lichtführer (2) jeweils aus kompatiblem Werkstoffen bestehen.

4. Anzeiger nach einem der Ansprüche 1 bis 3, bei dem der Beleuchtungsblock (1) und der Lichtführer (2) aus einer Form für Zweistoffspritzguss stammen.

## Claims

1. Indicator comprising a light box (1) and a lightguide (2) having a reflection face (6) turned towards the light box (1) and an illumination face (7) on the opposite side from the reflection face (6), **characterized in that** the box (1) and the lightguide (2) form a two-material one-piece light assembly.

2. Indicator according to Claim 1, in which the reflection face (6) forms the joint surface between the box (1) and the lightguide (2).

3. Indicator according to either of Claims 1 and 2, in which the light box (1) and the lightguide (2) are made respectively of compatible materials.

4. Indicator according to one of Claims 1 to 3, in which the light box (1) and the lightguide (2) are obtained from a mould for two-shot injection moulding.
